# EUROPEAN PATENT SPECIFICATION

(11) **EP 2 644 910 B1**
(45) Date of publication and mention of the grant of the patent: **23.05.2018**
(21) Application number: 13000448.4
(22) Date of filing: 30.01.2013
(51) Int. Cl.: F16B 31/02, F16B 33/00, H01R 13/621

(54) **Connector connecting bolt, connector and connector assembly**
Stecker-Verbindungsschraube, Stecker und Steckeranordnung
Boulon de connexion de connecteur, connecteur et ensemble connecteur

(30) Priority: 29.03.2012 JP 2012077788
(43) Date of publication of application: 02.10.2013
(73) Proprietor: Sumitomo Wiring Systems, Ltd., Yokkaichi City Mie 510 (JP)
(72) Inventor: Shibata, Takahiro, Yokkaichi-City, MIE 510-8503 (JP)
(74) Representative: Müller-Boré & Partner Patentanwälte PartG mbB

(56) References cited:
- GB-A- 2 291 156
- US-A1- 2010 143 074

## Description

The present invention relates to a connector connecting bolt, a connector to be connected by that bolt and a corresponding connector assembly.

A connector connecting bolt and a connector to be connected by that bolt are disclosed in Japanese Unexamined Patent Publication No. 2002-184516. The bolt includes a shaft portion long in an axial direction. A head portion is provided at one axial end part of the shaft portion and an externally threaded portion is provided on the other axial end part of the shaft portion. The bolt is mounted in a first connector. First and second connectors are lightly fitted and a rotational force is applied to the head portion with the bolt mounted in the first connector, whereby the externally threaded portion is threadably engaged with a nut mounted in the second connector. The second connector is pulled toward the first connector as the externally threaded portion is screwed into the nut, with the result that the first and second connectors are properly connected. When the connectors are properly connected, a seal portion is resiliently sandwiched between a head side part of the bolt and the first connector, thereby providing liquid-tight sealing between the bolt and the first connector.

As another method for providing sealing between the bolt and the first connector, a seal groove may be provided on the shaft portion and the bolt may be mounted in the first connector with a seal member such as an O-ring fitted in the seal groove. In this case, if the groove surface of the seal groove is damaged, sealability by the seal member is impaired. Thus, surface accuracy of the groove surface of the seal groove has to be strictly managed. However, if bolts are caught with each other in a plating process or during transportation, the shaft portion leading end of another bolt or the like may enter the seal groove to come into contact with and scratch the groove surface.

GB 2 291 156 (SUMITOMO WIRING SYSTEMS) discloses a blot having a breakneck which breaks if the desired fastening force is exceeded and which is spaced from a bolt head to avoid fly away when an impact wrench is used.

US 2010/143074 (SUMIYA YOSHIAKI ET AL) discloses a bolt having an annular sealing member fitted in a circumferential groove.

The present invention was completed in view of the above situation and an object thereof is to maintain sealability by preventing damage of the groove surface of a seal groove of a bolt.

This object is solved according to the invention by the features of the independent claims. Particular embodiments of the invention are subject of the dependent claims.

According to one aspect of the invention, there is provided a connector connecting bolt which is mountable in a first connector and connectable to a mating second connector, comprising: a head portion at or near a first axial end part; a screw portion at or near a second axial end part; a flange portion which bulges radially outwardly near and adjacent to the head portion and can come into contact with the second connector at the time of proper connection to prevent any further tightening of the bolt; at least one stepped recess which is located closer to the first axial end part than the screw portion, recessed radially inwardly and which can be fractured when an excessive tightening torque is applied; and at least one retaining groove which is located between the stepped recess and the screw portion in an axial direction and recessed radially inwardly and into which a retaining member for preventing the detachment of the bolt from the first connector by coming into contact with the first connector before connection is to be fitted, characterized by at least one seal groove which is located between the stepped recess and the flange portion in the axial direction and recessed radially inwardly and into which at least one seal member to be held in close contact with the first connector in a liquid-tight manner at the time of proper connection is to be fitted. The thickness of a flange portion is larger than the width of a seal groove.

A width and depth of the seal groove is so set that a shaft portion leading end of another connector connecting bolt does not come into contact with a groove surface of the seal groove of the bolt even if the other bolt faces in an opposite direction relative to the bolt and interferes in an inclined posture.

A thickness of the flange portion and a width and depth of the seal groove are so set that the flange portion of another connector connecting bolt does not come into contact with a groove surface of the seal groove of the bolt even if the other bolt substantially faces in the same direction as the bolt and interferes in a horizontal posture or inclined posture.

According to the above, even if another bolt tries to enter the seal groove from the one axial end side in such a circumstance that the bolts are caught with each other, the leading end of this bolt interferes with the flange portion, thereby being prevented from entering the seal grooves. Further, even if another bolt tries to enter the seal groove from the other axial end side, the leading end of this bolt interferes with the stepped recess, thereby being prevented from entering the seal groove. Thus, even if the bolts are caught with each other, damage of the groove surface of the seal groove is prevented. As a result, predetermined sealability can be maintained. The contact of a flange portion of another bolt with the groove surface of the seal groove is prevented when bolts are caught with each other. As a result, damage of the groove surface of the seal groove is more reliably prevented.

The present invention may be particularly configured or embodied as follows.

The bolt may further include at least one auxiliary recess which is connected to an other axial end of the stepped recess and recessed radially inwardly and with which a jig is brought or bringable into contact after the fracture of the stepped recess. If the leading end of another bolt trying to enter from the other axial end side enters the auxiliary recess when the bolts are caught with each other, this leading end is guided to the stepped recess. Thus, damage of the groove surface of the seal groove is more reliably prevented.

A diameter of a bottom surface of the stepped recess may be set to be smaller than a diameter of the screw portion.

The stepped recess may be a part having a smallest diameter in the bolt.

A depth of the auxiliary recess may be set to be smaller than that of the stepped recess and/or larger than that of the seal groove.

A width of the auxiliary recess may be set to be larger than that of the stepped recess.

A depth of the retaining groove may be set to be smaller than that of the seal groove.

According to another aspect of the invention, there is further provided a connector to be connected to a mating connector by a bolt according to the above aspect of the invention or a particular embodiment thereof, wherein: the connector includes a tubular portion with a bolt insertion hole configured such that the bolt is insertable therethough and is movable in the axial direction between an initial position before connection and a connection position after connection while penetrating through the bolt insertion hole.

According to a particular embodiment, the seal member fitted in the seal groove may be exposed from one axial end opening edge of the tubular portion and/or the retaining member may be in contact with an other axial end opening edge of the tubular portion at the initial position.

Particularly, the seal member may be held in close contact with the inner peripheral surface of the tubular portion and the tubular portion may be configured such that the flange portion is in contact with the one axial end opening edge of the tubular portion at the connection position.

Further particularly, the connector may be connectable to the mating connector by the screw portion of the bolt on an other axial end part being rotated about an axis when a rotational force is applied to the head portion at one axial end part so that the mating connector is pulled toward the connector by the screwing of the screw portion.

According to a particular embodiment of the invention, there is further provided a connector to be connected by the above bolt, wherein the first connector includes a tubular portion with a bolt insertion hole through which the bolt is to be inserted, and the bolt is movable in the axial direction between an initial position before connection and a connection position after connection while penetrating through the bolt insertion hole; the seal member fitted in the seal groove is exposed from one axial end opening edge of the tubular portion and the retaining ring is in contact with an other axial end opening edge of the tubular portion at the initial position; and the seal member is held in close contact with the inner peripheral surface of the tubular portion and the flange portion is in contact with the one axial end opening edge of the tubular portion at the connection position. According to this, since a state of the seal member can be visually confirmed before connection, the seal member can be replaced in advance if being damaged. Further, since the seal member can be held in an uncompressed state before connection, sealing performance can be satisfactorily exhibited. Furthermore, since the bolt is held at the initial position and the connection position, handling is excellent.

According to a further aspect of the invention, there is further provided a connector assembly comprising a connector according to the above further aspect of the invention or a particular embodiment thereof and a mating connector connectable to the connector by means of a rotation of the bolt.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a side view of a bolt according to one embodiment of the present invention,
FIG. 2 is a side view showing a state where the a shaft portion leading end of another bolt interferes in a stepped recess,
FIG. 3 is a side view showing a state where the shaft portion leading end of the other bolt interferes with the a flange portion,
FIG. 4 is a side view showing a state where a flange portion of the other bolt is not in contact with the groove surface of a seal groove,
FIG. 5 is a side view showing a state where the other bolt is further inclined,
FIG. 6 is a side view showing a state where the shaft portion leading end of the other bolt is not in contact with the groove surface of the seal groove,
FIG. 7 is a section showing a state where first and second connectors are properly connected,
FIG. 8 is a section showing a state where the first and second connectors are separated, and
FIG. 9 is a rear view of the first connector.

### <Embodiment>

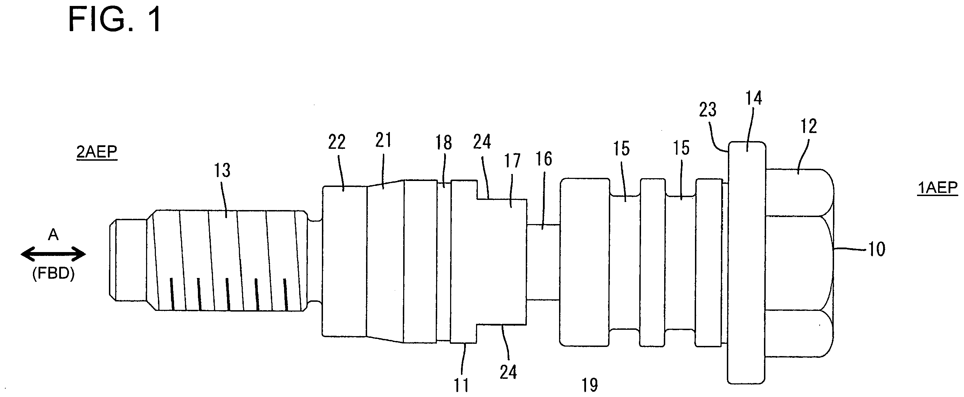

One particular embodiment of the present invention is described with reference to FIGS. 1 to 9.

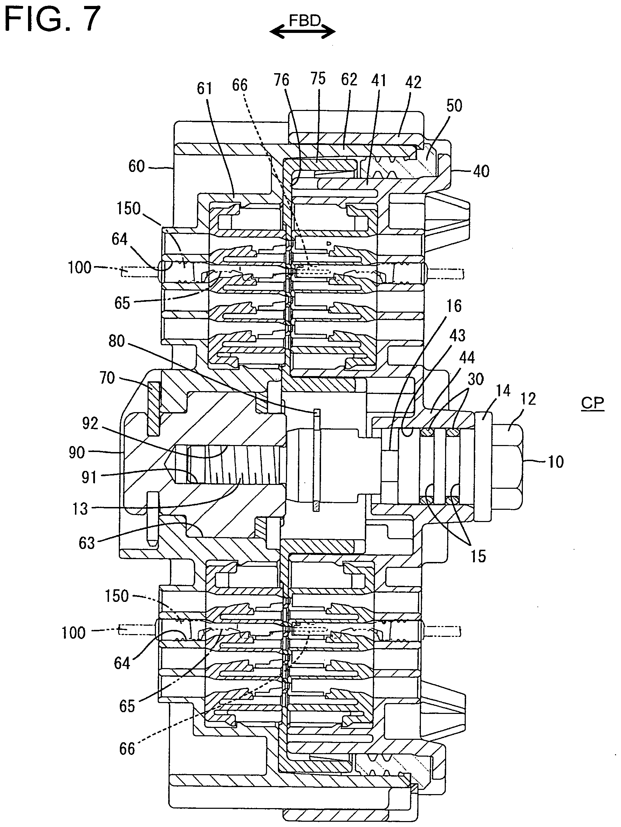

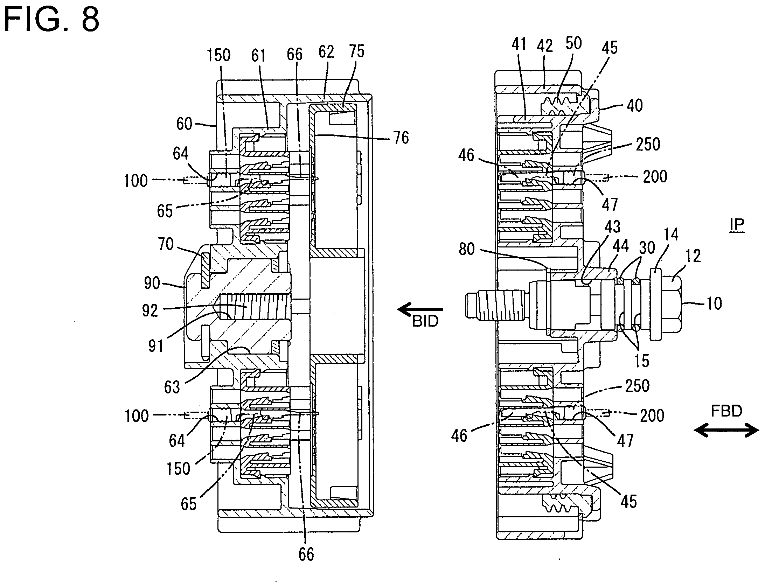

As shown in FIGS. 7 and 8, a connector is composed of or comprises first and second connectors 40, 60 connectable to each other. At least one bolt 10 is mounted or mountable in or to the first connector 40 and at least one respective nut 90 is mounted or mountable in or to the second connector 60. The bolt 10 is to be screwed into the nut 90, whereby the first and second connectors 40, 60 are connected or secured to each other. Note that, in the following description, connection surface sides of the first and second connectors 40, 60 are referred to as front sides concerning forward and backward directions FBD.

As shown in FIG. 8, the second connector 60 includes a second housing portion 61 (particularly substantially in the form of a flat block) and a (particularly substantially tubular) receptacle 62 substantially projecting forward from (particularly the peripheral edge of the front end of) the second housing portion 61. A nut mounting hole 63 is provided in an intermediate part (particularly substantially in a central part) of the second housing portion 61. The nut 90 is to be at least partly inserted into the nut mounting hole 63 and particularly retained by a stopper 70. The nut 90 includes a bolt receiving portion 91 substantially extending in forward and backward directions FBD (axial direction) and open on the front surface. The inner peripheral surface of the bolt receiving portion 91 particularly is spirally threaded to form a screw receiving portion 92. It should be understood, however, that the screw receiving portion 92 may have a different configuration such as a bayonet configuration.

One or more, particularly a plurality of second cavities 64 are formed to substantially extend in forward and backward directions FBD adjacent to (particularly substantially around) the nut mounting hole 63 in the second housing portion 61. A male terminal fitting 65 is to be inserted into the (particularly each) second cavity 64 from an insertion side, particularly substantially from behind. The male terminal fitting 65 is so formed that a tab 66 projects at or near a front side, electrically connected to a wire 100 and particularly crimped and connected to a resilient (particularly rubber) plug 150 fitted on (particularly an end portion of) the wire 100. The resilient (particularly rubber) plug 150 is to be at least partly inserted into the second cavity 64 together with the male terminal fitting 65 to come into close contact with the inner peripheral surface of the second cavity 64, thereby functioning to seal the interior of the second housing portion 61 in a fluid- or liquid-tight manner. Further, when the male terminal fitting 65 is properly inserted into the second cavity 64, the tab 66 is arranged to at least partly project into the receptacle 62.

A moving plate 75 which moves backward (or in an insertion direction of the first connector 40 into the receptcle 62) in a connection process of the first and second connectors 40, 60 particularly is mounted in the receptacle 62. As shown in FIG. 8, the leading ends of the tabs 66 particularly at least partly are surrounded by a front wall 76 of the moving plate 75 before the first and second connectors 40, 60 are connected, whereby the interference of an external matter with leading end portions of the tab(s) 66 can be avoided. Note that the second housing portion 61 and the receptacle 62 are made e.g. of synthetic resin and the male terminal fitting(s) 65 and/or the nut 90 are made of metal.

As shown in FIG. 8, the first connector 40 includes a first housing portion 41 (particularly substantially in the form of a flat block) and a (particularly substantially tubular) fitting tube portion 42 at least partly surrounding the first housing portion 41. When the first and second connectors 40, 60 are properly connected, the receptacle 62 at least partly is inserted into a space between the first housing portion 41 and the fitting tube portion 42 as shown in FIG. 7. A tubular portion 44 including a bolt insertion hole 43 substantially extending along forward and backward directions FBD is provided in an intermediate part (particularly substantially in a central part) of the first housing portion 41. The bolt insertion hole 43 particularly is formed in the tubular portion 44. The bolt 10 is to be mounted to penetrate through the bolt insertion hole 43.

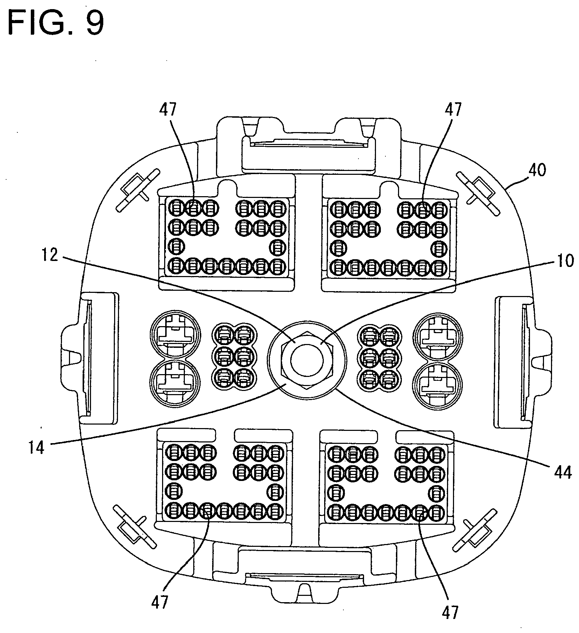

As shown in FIG. 9, one or more, particularly a plurality of first cavities 47 are formed to extend in forward and backward directions FBD adjacent to or substantially around the tubular portion 44 in or at the first housing portion 41. As shown in FIG. 8, a female terminal fitting 45 is to be at least partly inserted into each first cavity 47 from an insertion side, particularly substantially from behind. The female terminal fitting 45 includes a box portion 46 connectable to the tab 66 by at least partly receiving the tab 66 and is electrically connected to a wire 200 and particularly crimped and connected to a resilient (particularly rubber) plug 350 fitted on (particularly an end portion of) the wire 200. The resilient (particularly rubber) plug 250 is to be at least partly inserted into the first cavity 47 together with the female terminal fitting 45 to come into close contact with the inner peripheral surface of the first cavity 47, thereby sealing the interior of the first housing portion 41 in a fluid- or liquid-tight manner. Further, at least one seal ring 50 is to be mounted on the outer peripheral surface of the first housing portion 41. As shown in FIG. 7, when the first and second connectors 40, 60 are properly connected, the seal ring 50 is resiliently sandwiched or provided between the receptacle 62 and the first housing portion 41, thereby sealing between the first and second connectors 40, 60 in a fluid- or liquid-tight manner. Note that the first housing portion 41 and the fitting tube portion 42 are made e.g. of synthetic resin and/or the female terminal fitting(s) and/or the bolt 10 are made of metal.

Next, the bolt 10 is described. As shown in FIG. 1, the bolt 10 includes a long and narrow shaft portion 11 substantially extending in forward and backward directions FBD (axial direction A). A head portion 12 having a shape deviating from a cylindrical shape (such as a hexagonal shape, a rectangular shape or the like) when viewed from behind and bulging radially outwardly is provided on or near a rear end part (one or a first axial end part 1AEP) of the shaft portion 11. Further, a screw portion 13 threadably engageable with the bolt receiving portion 91 is provided on a front end part (other or second axial end part 2AEP) of the shaft portion 11. A flange portion 14, one or more seal grooves 15, at least one stepped recess 16, one or more auxiliary recesses 17, at least one retaining groove 18, at least one guide portion 21 and/or at least one flat portion 22 are arranged side by side (or one adjacent to the other) in forward and backward directions FBD (axial direction A) between the head portion 12 and the screw portion 13 on the shaft portion 11. Any of these flange portion 14, seal groove(s) 15, stepped recess(es) 16, auxiliary recess(es) 17, retaining groove(s) 18, guide portion(s) 21 and/or flat portion(s) 22 particularly is provided on a trunk portion 19 having a larger diameter than the screw portion 13 on the shaft portion 11.

The flange portion(s) 14 bulge(s) radially outwardly particularly substantially over the entire circumference and/or is arranged adjacent to the front end of the head portion 12. The front surface of the flange portion 14 serves as a bearing surface 23 which rests or is intended to rest on a rear end opening edge of the tubular portion 44 when the first and second connectors 40, 60 are properly connected.

The seal groove(s) 15 particularly is/are formed by recessing the outer peripheral surface of the trunk portion 19 particularly over the entire circumference and/or arranged right before or adjacent to the flange portion 14. In the case of this embodiment, one or more (e.g. two) seal grooves 15 are arranged particularly at a short distance from each other in forward and backward directions FBD (axial direction A). The width of the seal grooves 15 particularly is set to be smaller than the thickness (thickness in forward and backward directions FBD) of the flange portion 14. As shown in FIG. 8, one or more (particularly substantially ring-shaped) seal members 30 are to be fitted in the respective seal groove(s) 15. The seal members 30 are made of a resilient material particularly of rubber such as silicon rubber and/or closely fitted in the seal groove(s) 15 and arranged to bulge out from the seal groove(s) 15 in a state fitted in the seal groove(s) 15.

The at least one stepped recess 16 particularly is formed by recessing the outer peripheral surface of the trunk portion 19 particularly substantially over the entire circumference and/or arranged before or adjacent to the seal grooves 15. As shown in FIG. 1, the diameter of the bottom surface of the stepped recess 16 particularly is set to be smaller than the diameter of the screw portion 13, and/or the stepped recess 16 is a part having a smallest diameter in the bolt 10. When an excessive tightening torque is applied to the shaft portion 11, the stepped recess 16 particularly is fractured and the bolt 10 is separated into two parts at the stepped recess 16.

The auxiliary recess(es) 17 particularly is/are formed by recessing upper and/or lower parts of the outer peripheral surface of the trunk portion 19 and/or arranged to be continuous with the front end of the stepped recess 16 via at least one step. The depth of the auxiliary recesses 17 particularly is set to be smaller than that of the stepped recess 16 and/or larger than that of the seal groove 15. Further, the width of the auxiliary recesses 17 particularly is set to be larger than that of the stepped recess 16. The auxiliary recess(es) 17 particularly include(s) one or more flat surface portions 24 paired in a radial direction. The bolt 10 can be removed by bringing an unillustrated jig into contact with the (particularly both) flat surface portion(s) 24 and being rotated particularly after the stepped recess 16 is fractured. Note that the auxiliary recess(es) 17 particularly is/are arranged in an axially intermediate part (particularly substantially in a central part) of the entire bolt 10 in forward and backward directions FBD (axial direction A).

The retaining groove 18 is formed by recessing the outer peripheral surface of the trunk portion 19 particularly substantially over the entire circumference and/or arranged before or adjacent to the auxiliary recesses 17. The depth of the retaining groove 18 particularly is set to be smaller than that of the seal groove(s) 15. As shown in FIG. 8, a (particularly substantially C-shaped) retaining ring 80 is to be mounted in the retaining groove 18. Specifically, the retaining ring 80 is made of metal, and hooked to the retaining groove 18 and arranged to project out from the retaining groove 18 in a state mounted in the retaining groove 18.

As shown in FIG. 1, the at least one tapered guide portion 21 is formed on the outer peripheral surface of the trunk portion 19 to reduce a diameter toward the front and/or arranged before or adjacent to the retaining groove 18. In the process of mounting the retaining ring 80, the retaining ring 80 slides on the guide portion 21 to be resiliently widened. As being properly mounted, the retaining ring 80 is displaced in a return direction to be locked in the retaining groove 18.

The flat portion 22 particularly continuously extends substantially with the same diameter in forward and backward directions FBD from the front end of the guide portion 21 to the front end of the trunk portion 19. One or more radial steps are formed at or near the front end of the flat portion 22, the front and/or rear ends of the retaining groove 18, the front ends of the auxiliary recess(es) 17, the front and/or rear ends of the stepped recess 16, the front and/or rear ends of the (particularly both) seal groove(s) 15 and/or the front and/or rear ends of the flange portion 14.

Note that the bolt 10 is movable relative to the first connector 40 substantially in forward and backward directions FBD (axial direction A) between an initial position IP before connection and a connection position CP after connection and can be held at the initial position IP and the connection position CP with movements thereof restricted as shown in FIGS. 8 and 7.

The bolt 10 and the connector according to the embodiment are structured as described above and functions thereof are described next.

Since usually a multitude of bolts 10 are gathered at the time of plating or transportation, there is a possibility that the bolts 10 are caught with each other and the groove surface of the seal groove 15 is damaged by another bolt 10A. However, according to this embodiment, damage of the seal groove 15 can be avoided by the above structure of the bolt 10.

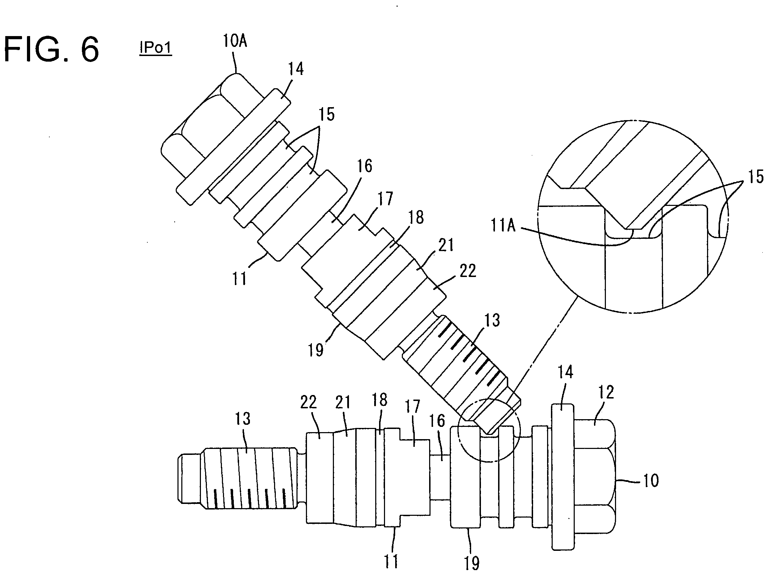

The width and depth of the seal grooves 15 particularly are so set that a shaft portion leading end 11A of the other bolt 10A does not come into contact with the groove surfaces of the seal grooves 15 of the bolt 10 even if the other bolt 10A faces in an opposite direction relative to the bolt 10 and interferes in an inclined posture IPo1, for example, as shown in FIG. 6.

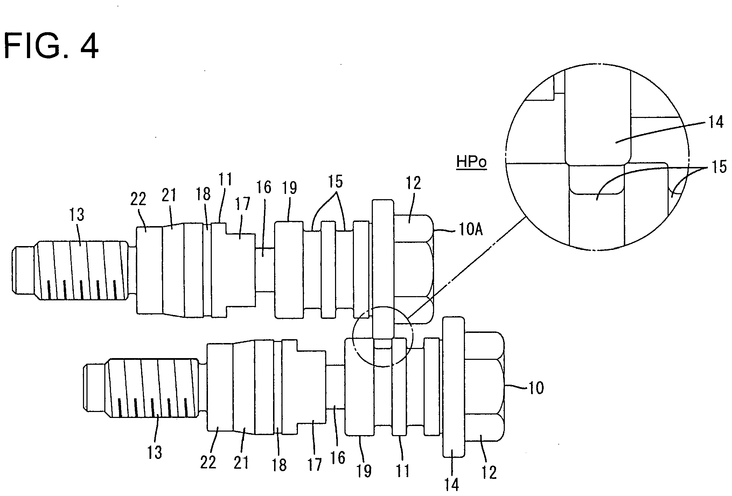

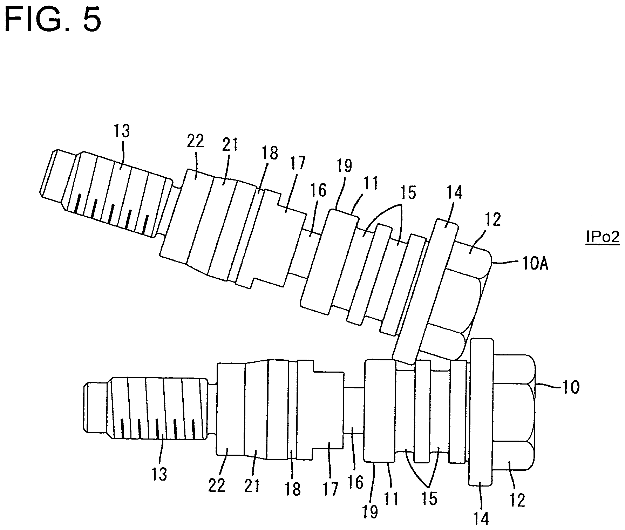

Further, the thickness of the flange portion 14 and the width and depth of the seal grooves 15 particularly are so set that the flange portion 14 of the other bolt 10A does not come into contact with the groove surface(s) of the seal groove(s) 15 of the bolt 10 even if the other bolt 10A substantially faces in the same direction as the bolt 10 and interferes in a horizontal posture HPo or inclined posture IPo2, for example, as shown in FIGS. 4 and 5.

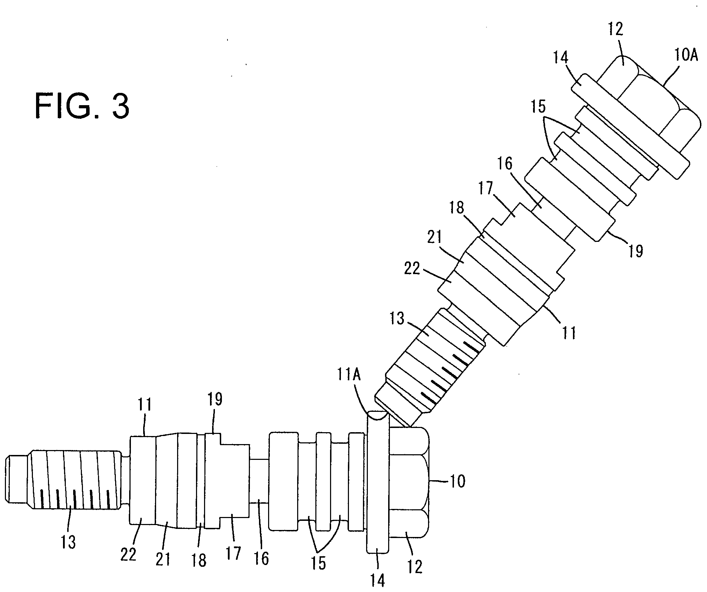

Further, even if the other bolt 10A faces in the same direction as the bolt 10 and comes in an inclined posture from behind, for example, as shown in FIG. 3, the shaft portion leading end 11A of the other bolt 10A particularly interferes with the rear end of the flange portion 14 of the bolt 10, thereby preventing any further forward movement of the other bolt 10A. This prevents the shaft portion leading end 11A of the other bolt 10A from entering the seal groove(s) 15.

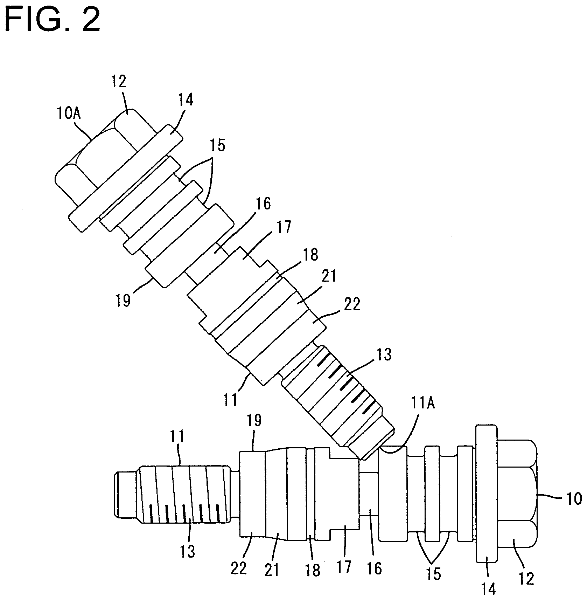

Further, even if the other bolt 10A substantially faces in an opposite direction relative to the bolt 10 and comes in an inclined posture from front, for example, as shown in FIG. 2, the shaft portion leading end 11A of the other bolt 10A particularly interferes with the rear end of the stepped recess 16, thereby preventing any further backward movement of the other bolt 10A. This prevents the shaft portion leading end 11A of the other bolt 10A from entering the seal groove(s) 15.

Note that, in the case of this embodiment, the shaft portion leading end 11A of the other bolt 10A is guided to the stepped recess 16 after sliding on the groove bottom of the auxiliary recess 17 since the stepped recess 16 particularly is dropped from the auxiliary recesses 17 via a step. Specifically, any further backward movement of the other bolt 10A is (particularly also) prevented by the hooking engagement of the shaft portion leading end 11A of the other bolt 10A coming from front with the rear end of the retaining groove 18. Thus, the entrance of the other bolt 10A into the seal groove(s) 15 is more reliably prevented.

Thereafter, the one or more seal members 30 are fitted into the one or more respective seal grooves 15 of the bolt 10 and, in that state, the bolt 10 at least partly is inserted into the tubular portion 44 of the first connector 40 from the insertion side, particularly substantially from behind. When the bolt 10 penetrates through the bolt insertion hole 43 and reaches the initial position IP as shown in FIG. 8, the seal member 30 fitted in the front seal groove 15 particularly comes into contact with the rear end opening edge of the tubular portion 44 to prevent any further insertion of the bolt 10. Further, the retaining ring 80 mounted in the retaining groove 18 particularly comes into contact with a front end opening edge of the tubular portion 44 to prevent the bolt 10 from being detached backward. In this way, the bolt 10 is held or positioned at the initial position IP particularly with movements thereof restricted. At this time, the seal member(s) 30 fitted in the (both) seal groove(s) 15 particularly is/are exposed to the outside from the front end opening edge of the tubular portion 44, so that an operator can visually confirm states of the both seal members 30.

Subsequently, the first and second connectors 40, 60 substantially are arranged right opposite to each other and, in that state, connected to each other. At the time of starting the connection, the shaft portion leading end 11A of the bolt 10 is inserted in the bolt inserting direction BID into the bolt receiving portion 91 of the nut 90. In that state, an unillustrated jig is or can be brought into contact with the head portion 12 of the bolt 10 and rotated. Then, the shaft portion 11 is rotated about an axis (about the axial direction A), the screw portion 13 is threadably engaged with the screw receiving portion 92 and the bolt 10 is screwed into the nut 90. As the bolt 10 is screwed, the first and second connectors 40, 60 are connected more. When the first and second connectors 40, 60 are properly connected to each other as shown in FIG. 7, the female and male terminal fittings 45, 65 are properly connected to each other. Further, in a state where the first and second connectors 40, 60 are properly connected to each other, the flange portion 14 comes into contact with the rear end opening edge of the tubular portion 44 to prevent any further spiral insertion of the bolt 10. Further, at the time of proper connection, the (particularly both) seal member(s) 30 particularly is/are accommodated in the tubular portion 44 and resiliently held in close contact with the inner peripheral surface of the tubular portion 44. In this way, the interior of the tubular portion 44 is sealed in a fluid- or liquid-tight manner to prevent the entrance of fluid such as water into a connection area between the first and second connectors 40, 60 from the outside.

As described above, according to this embodiment, even if the other bolt 10A tries to enter the seal groove 15 from behind in such a circumstance that the bolts 10 are caught with each other, the shaft portion leading end 11A of the bolt 10A interferes with the flange portion 14 of the bolt 10, thereby being prevented from entering the seal grooves 15. Further, even if the other bolt 10A tries to enter the seal groove(s) 15 from front, the shaft portion leading end 11A of the bolt 10A interferes with the stepped recess 16 of the bolt 10, thereby being prevented from entering the seal groove(s) 15. Thus, even if the bolts 10 are caught with each other, damage of the groove surface(s) of the seal groove(s) 15 is prevented. As a result, specified (predetermined or predeterminable) sealability can be maintained.

Since the thickness of the flange portion 14 particularly is larger than the width of the seal groove(s) 15, the contact of the flange portion 14 of the other bolt 10A with the groove surface(s) of the seal groove(s) 15 of the bolt 10 is prevented when the bolts 10, 10A are caught with each other. As a result, damage of the groove surface(s) of the seal groove(s) 15 is more reliably prevented.

Further, since the auxiliary recess(es) 17 with which the jig is to be brought into contact after the fracture of the stepped recess 16 are formed to be continuous with the stepped recess 16 by recessing the shaft portion 11, the shaft portion leading end 11A of the other bolt 10A trying to enter from front is guided from the auxiliary recess 17 to the stepped recess 16 and difficult to enter the seal groove(s) 15 when the bolts 10, 10A are caught with each other.

Furthermore, since the (both) seal member(s) 30 particularly is/are exposed to the outside from the rear end opening edge of the tubular portion 44 with the bolt 10 held at the initial position IP, the state(s) of the seal member(s) 30 can be visually confirmed before connection. As a result, the seal member 30 can be replaced in advance if it is damaged. Further, since the seal member(s) 30 particularly can be held in an uncompressed state, sealing performance can be satisfactorily exhibited. Furthermore, handling is excellent since the bolt 10 is held at the initial position and the connection position.

Accordingly, to maintain sealability and improve overall operability, a bolt 10 includes a flange portion 14 which bulges radially outwardly near and adjacent to an other axial end 2AEP of a head portion 12 and comes into contact with a second connector 60 at the time of proper connection to prevent any further tightening, a stepped recess 16 which is located closer to one axial end part 1AEP than a screw portion 13, recessed radially inwardly and to be fractured when an excessive tightening torque is applied, at least one retaining groove 18 which is located between the stepped recess 16 and the screw portion 13 and recessed radially inwardly and into which a retaining ring or member 80 for preventing the detachment of the bolt from a first connector 40 by coming into contact with the first connector 40 before connection is to be fitted, and one or more seal grooves 15 which is/are located between the stepped recess 16 and the flange portion 14 and recessed radially inwardly and into which one or more respective seal members 30 to be held in close contact with the first connector 40 in a fluid- or liquid-tight manner at the time of proper connection are to be at least partly fitted.

### <Other Embodiments>

The present invention is not limited to the above described and illustrated embodiment. For example, the following embodiments are also included in the technical scope of the present invention.
(1) Only one seal groove may be formed on the outer peripheral surface of the shaft portion and the seal member may be fitted in this one seal groove.
(2) The head portion and the flange portion may be spaced apart from each other.
(3) The bolt may be a square head bolt with a head portion having a rectangular shape when viewed from behind.

### Reference Numerals

- 10: bolt
- 10A: another bolt
- 11: shaft portion
- 12: head portion
- 13: screw portion
- 14: flange portion
- 15: seal groove
- 16: stepped recess
- 17: auxiliary recess
- 18: retaining groove
- 30: seal member
- 40: first connector
- 43: bolt insertion hole
- 44: tubular portion
- 60: second connector
- 80: retaining ring (retaining member)
- 90: nut

## Claims

1. A connector connecting bolt (10) which is mountable in a first connector (40) and connectable to a mating second connector (60), comprising:
a head portion (12) at or near a first axial end part (1AEP);
a screw portion (13) at or near a second axial end part (2AEP);
a flange portion (14) which bulges radially outwardly near and adjacent to the head portion (12) and can come into contact with the second connector (60) at the time of proper connection to prevent any further tightening of the bolt (10);
at least one stepped recess (16) which is located closer to the first axial end part (1AEP) than the screw portion (13), recessed radially inwardly and which can be fractured when an excessive tightening torque is applied; and
at least one retaining groove (18) which is located between the stepped recess (16) and the screw portion (13) in an axial direction (A) and recessed radially inwardly and into which a retaining member (80) for preventing the detachment of the bolt (10) from the first connector (40) by coming into contact with the first connector (40) before connection is to be fitted,
**characterized by** at least one seal groove (15) which is located between the stepped recess (18) and the flange portion (14) in the axial direction (A) and recessed radially inwardly and into which at least one seal member (30) to be held in close contact with the first connector (40) in a fluid-tight manner at the time of proper connection is to be fitted,
wherein the thickness of the flange portion (14) is larger than the width of the seal groove (15),
wherein a width and depth of the seal groove (15) is so set that a shaft portion leading end (11A) of another connector connecting bolt (10A) does not come into contact with a groove surface of the seal groove (15) of the bolt (10) even if the other bolt (10A) faces in an opposite direction relative to the bolt (10) and interferes in an inclined posture (IPo1), and
wherein a thickness of the flange portion (14) and a width and depth of the seal groove (15) are so set that the flange portion (14) of another connector connecting bolt (10A) does not come into contact with a groove surface of the seal groove (15) of the bolt (10) even if the other bolt (10A) substantially faces in the same direction as the bolt (10) and interferes in a horizontal posture (HPo) or inclined posture (IPo2).

2. A connector connecting bolt according to claim 1, further comprising at least one auxiliary recess (17) which is connected to an other axial end of the stepped recess (16) and recessed radially inwardly and with which a jig is bringable into contact after the fracture of the stepped recess (16).

3. A connector connecting bolt according to any one of the preceding claims, wherein a diameter of a bottom surface of the stepped recess (16) is set to be smaller than a diameter of the screw portion (13).

4. A connector connecting bolt according to any one of the preceding claims, wherein the stepped recess (16) is a part having a smallest diameter in the bolt (10).

5. A connector connecting bolt according to any one of the preceding claims, wherein a depth of the auxiliary recess (17) is set to be smaller than that of the stepped recess (16) and/or larger than that of the seal groove (15).

6. A connector connecting bolt according to any one of the preceding claims, wherein a width of the auxiliary recess (17) is set to be larger than that of the stepped recess (16).

7. A connector connecting bolt according to any one of the preceding claims, wherein a depth of the retaining groove (18) is set to be smaller than that of the seal groove (15).

8. A connector sub-assembly comprising a connector (40) and a bolt according to any one of the preceding claims, the connector (40) to be connected to a mating connector (60) by the bolt, wherein: the connector (40) includes a tubular portion (44) with a bolt insertion hole (43) wherein the bolt (10) is inserted therethough and is movable in the axial direction (A) between an initial position (IP) before connection and a connection position (CP) after connection while penetrating through the bolt insertion hole (43).

9. A connector sub-assembly according to claim 8, wherein the seal member (30) fitted in the seal groove (15) is exposed from one axial end opening edge of the tubular portion (44) and/or the retaining member (80) is in contact with an other axial end opening edge of the tubular portion (44) at the initial position (IP).

10. A connector sub-assembly according to claim 8 or 9, wherein the seal member (30) is held in close contact with the inner peripheral surface of the tubular portion (44) and the tubular portion (44) is configured such that the flange portion (14) is in contact with the one axial end opening edge of the tubular portion (44) at the connection position (CP).

11. A connector sub-assembly according to any one of the preceding claims 8 to 10, wherein the connector (40) is connectable to the mating connector (60) by the screw portion (13) of the bolt (10) on an other axial end part being rotated about an axis (A) when a rotational force is applied to the head portion (12) at one axial end part (1AEP) so that the mating connector (60) is pulled toward the connector (40) by the screwing of the screw portion (13).

12. A connector assembly comprising a connector sub-assembly according to any one of the preceding claims 8 to 11 and a mating connector (60) connectable to the connector (40) by means of a rotation of the bolt (10).

## Patentansprüche

1. Verbinderverbindungsbolzen (10), der in einem ersten Verbinder (40) montierbar und mit einem zusammenpassenden bzw. dazugehörigen zweiten Verbinder (60) verbindbar ist, umfassend:
einen Kopfabschnitt (12) an oder nahe einem ersten axialen Endteil (1AEP);
ein Schraubenabschnitt (13) an oder nahe einem zweiten axialen Endteil (2AEP);
einen Flanschabschnitt (14), der sich nahe und angrenzend an bzw. benachbart zu dem Kopfabschnitt (12) radial nach außen wölbt und zu dem Zeitpunkt einer ordnungsgemäßen Verbindung mit dem zweiten Verbinder (60) in Kontakt kommen kann, um ein weiteres Festziehen des Bolzens (10) zu verhindern;
zumindest eine abgestufte Aussparung (16), die näher am ersten axialen Endteil (1AEP) angeordnet ist als der Schraubenabschnitt (13), radial nach innen ausgespart ist und die gebrochen werden kann, wenn ein übermäßiges Anziehdrehmoment aufgebracht wird; und
zumindest eine Rückhaltenut bzw. -rille (18), die sich zwischen der abgestuften Aussparung (16) und dem Schraubabschnitt (13) in einer axialen Richtung (A) befindet und radial nach innen ausgespart ist und in die ein Rückhalteglied (80) zum Verhindern des Ablösens des Bolzens (10) von dem ersten Verbinder (40), indem es mit dem ersten Verbinder (40) vor der Verbindung in Kontakt kommt, einzupassen ist,
**gekennzeichnet durch** zumindest eine Dichtungsnut bzw. -rille (15), die sich zwischen der abgestuften Aussparung (18) und dem Flanschabschnitt (14) in der axialen Richtung (A) befindet und radial nach innen ausgespart ist und in die zumindest ein Dichtungsglied (30), das in engem Kontakt mit dem ersten Verbinder (40) in fluiddichter Weise zu dem Zeitpunkt der ordnungsgemäß Verbindung zu halten ist, einzupassen ist,
wobei die Dicke des Flanschabschnitts (14) größer als die Breite der Dichtungsnut (15) ist,
wobei eine Breite und Tiefe der Dichtungsnut (15) so festgelegt ist, dass ein Schaftabschnitt-Führungsende (11A) eines anderen Verbinderverbindungsbolzens (10A) nicht mit einer Nutfläche bzw. -oberfläche der Dichtungsnut (15) des Bolzens (10) in Kontakt kommt, selbst wenn der andere Bolzen (10A) in eine entgegengesetzten Richtung relativ zu dem Bolzen (10) gewandt ist und in einer geneigten Haltung (IPo1) eingreift bzw. interferiert, und
wobei eine Dicke des Flanschabschnitts (14) und eine Breite und Tiefe der Dichtungsnut (15) so festgelegt sind, dass der Flanschabschnitt (14) eines anderen Verbinderverbindungsbolzens (10A) nicht mit einer Nutfläche bzw. - oberfläche der Dichtungsnut (15) des Bolzens (10) in Kontakt kommt, selbst wenn der andere Bolzen (10A) im Wesentlichen in die gleiche Richtung gewandt ist wie der Bolzen (10) und in einer horizontalen Haltung (HPo) oder einer geneigten Haltung (IPo2) eingreift bzw. interferiert.

2. Verbinderverbindungsbolzen nach Anspruch 1, ferner umfassend zumindest eine Hilfsaussparung (17), die mit einem anderen axialen Ende der abgestuften Aussparung (16) verbunden ist und radial nach innen ausgespart ist und mit der eine Vorrichtung bzw. ein Werkzeug nach dem Bruch der abgestuften Aussparung (16) in Kontakt bringbar ist.

3. Verbinderverbindungsschraube nach einem der vorhergehenden Ansprüche, wobei ein Durchmesser einer Bodenfläche bzw. -oberfläche der abgestuften Aussparung (16) kleiner festgelegt ist als ein Durchmesser des Schraubenabschnitts (13).

4. Verbinderverbindungsbolzen nach einem der vorhergehenden Ansprüche, wobei die abgestufte Aussparung (16) ein Teil mit einem kleinsten Durchmesser in dem Bolzen (10) ist.

5. Verbinderverbindungsbolzen nach einem der vorhergehenden Ansprüche, wobei eine Tiefe der Hilfsaussparung (17) kleiner als diejenige der abgestuften Aussparung (16) und/oder größer festgelegt ist als diejenige der Dichtungsnut (15).

6. Verbinderverbindungsbolzen nach einem der vorhergehenden Ansprüche, wobei eine Breite der Hilfsaussparung (17) größer festgelegt ist als diejenige der gestuften Aussparung (16).

7. Verbinderverbindungsbolzen nach einem der vorhergehenden Ansprüche, wobei eine Tiefe der Rückhaltenut (18) kleiner festgelegt ist als diejenige der Dichtungsnut (15).

8. Verbinderunteranordnung, umfassend einen Verbinder (40) und einen Bolzen nach einem der vorhergehenden Ansprüche, wobei der Verbinder (40) mit einem zusammenpassenden bzw. dazugehörigen Verbinder (60) durch den Bolzen zu verbinden ist, wobei:
der Verbinder (40) einen rohrförmigen Abschnitt (44) mit einem Bolzeneinsetzloch (43) enthält, wobei der Bolzen (10) durch dieses eingesetzt ist und in der axialen Richtung (A) zwischen einer Anfangsposition (IP) vor der Verbindung und einer Verbindungsposition (CP) nach der Verbindung bewegbar ist, während er durch das Bolzeneinsetzloch (43) hindurchdringt.

9. Verbinderunteranordnung nach Anspruch 8, wobei das Dichtungsglied (30), das in die Dichtungsnut (15) eingepasst ist, von einer axialen Endöffnungskante des rohrförmigen Abschnitts (44) freigelegt ist und/oder das Rückhalteglied (80) mit einer anderen axialen Endöffnungskante des rohrförmigen Abschnitts (44) an der Anfangsposition (IP) in Kontakt ist.

10. Verbinderunteranordnung nach Anspruch 8 oder 9, wobei das Dichtungsglied (30) in engem Kontakt mit der Innenumfangsfläche des rohrförmigen Abschnitts (44) gehalten ist und der rohrförmige Abschnitt (44) so konfiguriert ist, dass der Flanschabschnitt (14) mit der einen axialen Endöffnungskante des rohrförmigen Abschnitts (44) an der Verbindungsposition (CP) in Kontakt ist.

11. Verbinderunteranordnung nach einem der vorhergehenden Ansprüche 8 bis 10, wobei der Verbinder (40) mit dem zusammenpassenden Verbinder (60) durch den Schraubabschnitt (13) des Bolzens (10) an einem anderen axialen Endteil verbindbar ist, der um eine Achse (A) gedreht wird, wenn eine Drehkraft auf den Kopfabschnitt (12) an einem axialen Endteil (1AEP) ausgeübt wird, so dass der zusammenpassende Verbinder (60) durch das Schrauben des Schraubenabschnitts (13) zu dem Verbinder (40) gezogen wird.

12. Verbinderanordnung, umfassend eine Verbinderunteranordnung nach einem der vorhergehenden Ansprüche 8 bis 11 und einen zusammenpassenden bzw. dazugehörigen Verbinder (60), der mit dem Verbinder (40) mittels einer Drehung des Bolzens (10) verbindbar ist.

## Revendications

1. Boulon de connexion de connecteur (10) qui peut être monté dans un premier connecteur (40) et peut être connecté à un second connecteur conjugué (60), comprenant :
une portion de tête (12) au niveau ou près d'une première partie d'extrémité axiale (1AEP) ;
une portion de vis (13) au niveau ou près d'une seconde partie d'extrémité axiale (2AEP) ;
une portion de bride (14) qui renfle radialement vers l'extérieur près de et de manière adjacente à la portion de tête (12) et peut venir en contact avec le second connecteur (60) au moment de la connexion correcte pour empêcher tout serrage supplémentaire du boulon (10) ;
au moins un retrait étagé (16) qui est situé plus près de la première partie d'extrémité axiale (1AEP) que la portion de vis (13), en retrait radialement vers l'intérieur et qui peut être fracturé lorsqu'un couple de serrage excessif est appliqué ; et
au moins une rainure de retenue (18) qui est située entre le retrait étagé (16) et la portion de vis (13) dans une direction axiale (A) et en retrait radialement vers l'intérieur et dans laquelle un élément de retenue (80) pour empêcher la déconnexion du boulon (10) du premier connecteur (40) en venant en contact avec le premier connecteur (40) avant la connexion doit être ajusté,
**caractérisé par** au moins une rainure de joint (15) qui est située entre le retrait étagé (18) et la portion de bride (14) dans la direction axiale (A) et en retrait radialement vers l'intérieur et dans laquelle au moins un élément de joint (30) devant être maintenu en contact étroit avec le premier connecteur (40) de manière étanche au fluide au moment de la connexion correcte doit être ajusté,
dans lequel l'épaisseur de la portion de bride (14) est supérieure à la largeur de la rainure de joint (15),
dans lequel une largeur et profondeur de la rainure de joint (15) sont réglées de sorte qu'une extrémité de tête de portion de tige (11A) d'un autre boulon de connexion de connecteur (10A) ne vient pas en contact avec une surface de rainure de la rainure de joint (15) du boulon (10) même si l'autre boulon (10A) est tourné dans une direction opposée par rapport au boulon (10) et interfère dans une posture inclinée (IPo1), et
dans lequel une épaisseur de la portion de bride (14) et une largeur et profondeur de la rainure de joint (15) sont réglées de sorte que la portion de bride (14) d'un autre boulon de connexion de connecteur (10A) ne vient pas en contact avec une surface de rainure de la rainure de joint (15) du boulon (10) même si l'autre boulon (10A) est essentiellement tourné dans la même direction que le boulon (10) et interfère dans une posture horizontale (HPo) ou posture inclinée (IPo2).

2. Boulon de connexion de connecteur selon la revendication 1, comprenant en outre au moins un retrait auxiliaire (17) qui est connecté à une autre extrémité axiale du retrait étagé (16) et en retrait radialement vers l'intérieur et avec lequel un gabarit peut être amené en contact après la fracture du retrait étagé (16).

3. Boulon de connexion de connecteur selon l'une quelconque des revendications précédentes, dans lequel un diamètre d'une surface inférieure du retrait étagé (16) est réglé pour être inférieur à un diamètre de la portion de vis (13).

4. Boulon de connexion de connecteur selon l'une quelconque des revendications précédentes, dans lequel le retrait étagé (16) est une partie ayant un diamètre le plus petit dans le boulon (10).

5. Boulon de connexion de connecteur selon l'une quelconque des revendications précédentes, dans lequel une profondeur du retrait auxiliaire (17) est réglée pour être inférieure à celle du retrait étagé (16) et/ou supérieure à celle de la rainure de joint (15).

6. Boulon de connexion de connecteur selon l'une quelconque des revendications précédentes, dans lequel une largeur du retrait auxiliaire (17) est réglée pour être supérieure à celle du retrait étagé (16).

7. Boulon de connexion de connecteur selon l'une quelconque des revendications précédentes, dans lequel une profondeur de la rainure de retenue (18) est réglée pour être inférieure à celle de la rainure de joint (15).

8. Sous-ensemble de connecteur comprenant un connecteur (40) et un boulon selon l'une quelconque des revendications précédentes, le connecteur (40) devant être connecté à un connecteur conjugué (60) par le boulon, dans lequel :
le connecteur (40) inclut une portion tubulaire (44) avec un orifice d'insertion de boulon (43), dans lequel le boulon (10) est inséré à travers celle-ci et est mobile dans la direction axiale (A) entre une position initiale (IP) avant connexion et une position de connexion (CP) après connexion tout en pénétrant à travers l'orifice d'insertion de boulon (43).

9. Sous-ensemble de connecteur selon la revendication 8, dans lequel l'élément de joint (30) ajusté dans la rainure de joint (15) est exposé depuis un bord d'ouverture d'extrémité axiale de la portion tubulaire (44) et/ou l'élément de retenue (80) est en contact avec un autre bord d'ouverture d'extrémité axiale de la portion tubulaire (44) à la position initiale (IP).

10. Sous-ensemble de connecteur selon la revendication 8 ou 9, dans lequel l'élément de joint (30) est maintenu en contact étroit avec la surface périphérique interne de la portion tubulaire (44) et la portion tubulaire (44) est configurée de sorte que la portion de bride (14) est en contact avec le bord d'ouverture d'extrémité axiale en question de la portion tubulaire (44) à la position de connexion (CP).

11. Sous-ensemble de connecteur selon l'une quelconque des revendications précédentes 8 à 10, dans lequel le connecteur (40) peut être connecté au connecteur conjugué (60) par la portion de vis (13) du boulon (10) sur une autre partie d'extrémité axiale qui est tournée autour d'un axe (A) lorsqu'une force de rotation est appliquée à la portion de tête (12) au niveau d'une partie d'extrémité axiale (1AEP) de sorte que le connecteur conjugué (60) est tiré vers le connecteur (40) par le vissage de la portion de vis (13).

12. Ensemble de connecteur comprenant un sous-ensemble de connecteur selon l'une quelconque des revendications précédentes 8 à 11 et un connecteur conjugué (60) pouvant être connecté au connecteur (40) au moyen d'une rotation du boulon (10).
